# EUROPÄISCHE PATENTSCHRIFT

(11) **EP 0 698 785 B1**
(45) Veröffentlichungstag und Bekanntmachung des Hinweises auf die Patenterteilung: **11.04.2001**
(21) Anmeldenummer: 94810485.6
(22) Anmeldetag: 24.08.1994
(51) Int. Cl.: G01N 21/59, G06F 1/00

(54) **Computergesteuertes Gerät zur Erfassung optischer Transmissions- und/oder Remissionseigenschaften eines Messobjekts, Verfahren zum Betrieb eines solchen Geräts und Verfahren zur Initialisierung von Messfunktionen eines solchen Geräts**
Computer controlled device for detecting optical transmission and/or reemission properties of an object, method of operating such a device and method of initializing the measurement functions of such a device
Appareil commandé par ordinateur pour la détection des propriétés de transmission et/ou de réémission optique, procédé de fonctionnement d'un tel appareil et procédé d'initialisation des fonctions de mesure d'un tel appareil

(43) Veröffentlichungstag der Anmeldung: 28.02.1996
(73) Patentinhaber: Gretag-MacBeth AG, 8105 Regensdorf (CH)
(72) Erfinder: Berner, Markus, CH-8155 Niederhasli (CH); Senn, Thomas, CH-8157 Dielsdorf (CH)
(74) Vertreter: Schwabe - Sandmair - Marx

(56) Entgegenhaltungen:
- EP-A- 0 603 448
- WO-A-85/02310
- US-A- 4 740 890
- IBM TECHNICAL DISCLOSURE BULLETIN, Bd.27, Nr.7A, Dezember 1984, US Seiten 3903 - 3904 S.R.WHITE 'METHOD FOR CREATING MANY INDIVIDUALLY-DISTRIBUTABLE PROGRAMS ON A SINGLE DISKETTE'

## Beschreibung

Die Erfindung betrifft ein computergesteuertes Gerät zur Erfassung optischer Transmissions- und/oder Remissionseigenschaften eines Messobjekts, ein Verfahren zum Betrieb eines solchen Geräts sowie ein Verfahren zur Initialisierung von Messfunktionen eines solchen Geräts gemäss dem Oberbegriff des jeweiligen unabhängigen Patentanspruchs.

Computergesteuerte Geräte zur Erfassung optischer Transmissions- und/oder Remissionseigenschaften eines Messobjekts, wie beispielsweise Densitometer oder Spektralphotometer, sind weithin bekannt. Sie können entweder fest in eine Druckvorrichtung eingebaut sein oder als mobile Handgeräte ausgebildet sein. Ein solches Handgerät in Form eines Handdensitometers ist beispielsweise aus der EP-A-0,603,448 bekannt. Dieses Handdensitometer umfasst eine Messeinheit (z.B. einen ausfahrbaren Messkopf) zum Beleuchten des Messobjekts (z.B. eines Druckbogens) und zum Empfangen des durch das Messobjekt transmittierten und/oder des vom Messobjekt remittierten Lichts. Ferner weist das dort beschriebene Handgerät eine Eingabeeinheit auf, die dort als Handrad ausgebildet ist. Mit Hilfe dieses Handrads können beispielsweise die Art der Messung (Dichtemessung, Tonwertbestimmung etc.) eingegeben werden, es können auch bestimmte Parameter der Messung eingegeben werden, die Messung kann ausgelöst werden etc.. Bei anderen Handgeräten dieses Typs ist auch bekannt, solche Dinge mit Hilfe einer auf dem Handgerät vorgesehenen Tastatur einzugeben bzw. die Messung auszulösen. Ferner umfasst ein solches Handgerät natürlich eine Anzeigeeinheit (z.B. ein LCD-Display) zum Anzeigen der gemessenen Grössen wie auch zuvor zum Anzeigen der gewählten Art der Messung, der Parameter etc..

In ihrem Inneren weisen solche Geräte typischerweise auch eine nichtflüchtige Speichereinheit (z.B. ein ROM) auf, in welcher die einzelnen Messfunktionen des Geräts gespeichert sind. Auf diese in der nichtflüchtigen Speichereinheit gespeicherten Messfunktionen wird beim Betrieb des Geräts zugegriffen, sodass dem Benutzer jeweils sämtliche in dieser nichtflüchtigen Speichereinheit gespeicherten Messfunktionen zur Verfügung stehen. Eine Steuereinheit (Steuercomputer, Mikrocomputer) steuert dabei den Ablauf sämtlicher Vorgänge in dem Gerät.

Grundsätzlich können solche Geräte mit einer sehr grossen Anzahl von Messfunktionen ausgestattet sein, wie z.B. Dichtemessung, Messung von Dichtedifferenzen, Messung von Dichtezunahmen, Bestimmung von Druckkennlinien, Bestimmung der Flächendeckung, Kontrastmessung, Messung von Farbtonfehlern und viele Messfunktionen mehr. Die verschiedenen Anwender solcher Geräte benötigen jedoch nicht immer alle diese Messfunktionen und legen beim Kauf solcher Geräte auch keinen Wert darauf, dass das Gerät die nicht benötigten Messfunktionen ebenfalls aufweist, da üblicherweise erstens der Preis der besser ausgestatteten Geräte höher ist, zweitens die nicht so gut ausgestatteten Geräte natürlich einfacher in der Handhabung sind, da gewisse Messfunktionen als Option gar nicht angeboten werden und somit auch nicht zur Verwirrung des Benutzers beitragen können.

So benötigt ein typischer Drucker z.B. die Messfunktionen Dichte, Tonwertzunahme, Flächendeckung. Eine Druckerei mit höheren Qualitätsansprüchen benötigt beispielsweise die Messfunktionen Dichte, Tonwertzunahme, Flächendeckung, Druckkennlinie, Flächendeckung. Eine Repro-Anstalt wiederum benötigt z.B. die Messfunktionen Dichte und Tonwertzunahme. Andere Anwender hingegen benötigen nur die Messfunktion Dichte. Wieder andere Kunden wissen beim Kauf eines solchen Geräts noch nicht genau, was sie in Zukunft alles messen wollen bzw. durch den Wandel eines Betriebs (z.B. höhere Qualitätsansprüche einer Druckerei) müssen plötzlich zusätzliche Grössen mit einem solchen Gerät gemessen werden.

Aus diesem Grund sind unterschiedliche Geräte erhältlich, die mit verschiedenen Messfunktionen ausgestattet sind. Dies ist üblicherweise so realisiert, dass in der nichtflüchtigen Speichereinheit (z.B. ROM) jeweils alle die Messfunktionen (Programme) gespeichert sind, die das Gerät ausführen kann. Bei Geräten, die unterschiedliche Messfunktionen ausführen können, sind im ROM jeweils auch unterschiedliche Messfunktionen (Programme) gespeichert. Dies ist grundsätzlich eine Lösung, wie Geräte mit unterschiedlichen Messfunktionen bereitgestellt werden können und gleichzeitig die nicht gewünschten Messfunktionen nicht bereitgestellt werden und somit auch nicht zur Verwirrung des Benutzers beitragen können. Allerdings ist dies bei der Herstellung der Geräte insofern nachteilig, als die ROMs für die Geräte jeweils spezifisch so programmiert werden müssen, dass in ihnen nur ganz bestimmte Messfunktionen (Programme) gespeichert sind. Dies hat zur Folge, dass je nach Kundenwunsch bzw. je nach zum Verkauf angebotenem Gerätetyp ein spezieller ROM programmiert und hergestellt werden muss, mithin die Herstellung der verschiedenen Geräte relativ aufwendig ist.

Aus der US-A-4 740 890 ist eine Diskette bekannt, auf der ein Computerprogramm und ein für die jeweilige Diskette spezifischer Freigabe-Code, mit dessen Hilfe auf das Programm zugegriffen werden kann, gespeichert sind. Ferner ist ein Mechanismus vorgesehen, der es dem Benutzer erlaubt, zu Testzwecken für eine vorbestimmte Anzahl von Malen probeweise auf das Programm zuzugreifen. Ist die maximal zulässige Anzahl von Testzugriffen erreicht, wird die Diskette für weitere Zugriffe gesperrt.

Es ist daher eine Aufgabe der Erfindung, die Herstellung solcher Geräte wesentlich zu vereinfachen. Darüberhinaus ist es eine Aufgabe der Erfindung, die Geräte und ihre Betriebsverfahren so zu realisieren, dass die Geräte einfach aufrüstbar sind, dass also auf eine einfache Art und Weise dann weitere Messfunktionen bereitgestellt werden können, wenn der Benutzer dies wünscht, und zwar ohne dass zu diesem Zweck ein neues Gerät gekauft werden muss. Besonders wünschenswert ist es in diesem Zusammenhang, wenn die Aufrüstung des Geräts auf sehr einfache Weise möglich ist, ohne dass zum Beispiel das Gerät für längere Zeit zum Hersteller eingeschickt werden muss.

In Bezug auf das Gerät wird diese Aufgabe dadurch gelöst, dass in einer zweiten nichtflüchtigen Speichereinheit den einzelnen Messfunktionen zugeordnete Freigabe-Codes gespeichert sind, mit deren Hilfe die Steuereinheit auf die Messfunktionen in der ersten nichtflüchtigen Speichereinheit zugreift. Es können dadurch Geräte hergestellt werden, bei denen nur noch ein Typ von nichtflüchtiger Speichereinheit (z.B. ROM) hergestellt wird, in welchem alle überhaupt mit dem Gerät möglichen Messfunktionen (Programme) gespeichert sind. In einer zweiten nichtflüchtigen Speichereinheit sind Freigabe-Codes gespeichert. Die Steuerung ruft diese Freigabe-Codes aus der zweiten Speichereinheit auf und greift mittels dieser Freigabe-Codes auf diejenigen Messfunktionen aus der ersten nichtflüchtigen Speichereinheit zu, für die ein Freigabe-Code in der zweiten nichtflüchtigen Speichereinheit vorhanden ist. Nach aussen äussert sich das für den Benutzer so, als wären in dem Gerät grundsätzlich nur die Messfunktionen in dem Gerät vorhanden, die er wünscht. Andere Messfunktionen werden gar nicht auf der Anzeigeeinheit des Geräts dargestellt, da ohne Freigabe-Code für diese Messfunktionen gar nicht auf die Messfunktionen zugegriffen werden kann. Die Messfunktionen, auf die nicht zugegriffen werden kann, können daher auch nicht zur Verwirrung des Benutzers beitragen. Für die Herstellung des Geräts hat dies aber eine enorme Vereinfachung zur Folge: Es brauchen nämlich nur noch ROMs hergestellt werden, in denen sämtliche Messfunktionen (Programme) gespeichert sind. Durch die Freigabe-Codes, die sehr kurz und einfach zu speichern sind, wird festgelegt, auf welche Messfunktionen tatsächlich zugegriffen werden kann (also quasi welche Messfunktionen das Gerät für den Benutzer aufweist). Dies ermöglicht eine einfachere Herstellung der Geräte, darüberhinaus ermöglicht es aber auch noch eine einfache Aufrüstung dieser Geräte, ohne dass ein neues Gerät gekauft werden muss oder das Gerät für längere Zeit zum Hersteller eingeschickt werden muss, wie später noch erläutert wird.

Was das Betriebsverfahren eines solchen Geräts betrifft, so wird die Aufgabe entsprechend dadurch gelöst, dass mittels der Steuereinheit aus einer zweiten nichtflüchtigen Speichereinheit Freigabe-Codes aufgerufen werden, mit deren Hilfe auf die in der ersten nichtflüchtigen Speichereinheit gespeicherten Messfunktionen zugegriffen wird. Die dadurch erzielten Vorteile entsprechen denen, die bereits anhand des Geräts angeführt worden sind.

Was das Verfahren zur Initialisierung der Messfunktionen betrifft, so wird die Aufgabe dadurch gelöst, dass durch die Zuführung eines gerätespezifischen Initialisierungs-Codes in eine zweite nichtflüchtige Speichereinheit hinein Freigabe-Codes gespeichert werden, mit deren Hilfe beim Betrieb des Geräts mittels der Steuereinheit auf die jeweiligen Messfunktionen in der ersten nichtflüchtigen Speichereinheit zugegriffen wird. Dieses Verfahren ermöglicht einerseits auf einfache Weise, die Messfunktionen eines Messgeräts zu initialisieren, darüberhinaus ermöglicht es aber auch noch, ein bereits an einen Benutzer verkauftes Handgerät später nachzurüsten, also es mit weiteren oder anderen Messfunktionen auszustatten, ohne dass dazu das Gerät für längere Zeit zum Hersteller gesandt werden muss. Es muss nämlich nur der erforderliche Initialisierungs-Code dem Gerät zugeführt werden, mit dessen Hilfe dann die erforderlichen Freigabe-Codes in diese zweite nichtflüchtige Speichereinheit hinein gespeichert werden.

Weitere vorteilhafte Ausgestaltungen des Geräts sowie weitere vorteilhafte Varianten des Betriebs- und des Initialisierungsverfahrens ergeben sich aus den Merkmalen der jeweiligen abhängigen Ansprüche.

Im folgenden wird die Erfindung anhand der Zeichnung näher erläutert; es zeigen in schematischer Darstellung:
- Fig. 1: eine Ansicht eines Ausführungsbeispiels eines erfindungsgemässen Geräts, hier in Form eines Handgeräts,
- Fig. 2: eine Aufsicht auf das Gerät der Fig. 1,
- Fig. 3: wesentliche Einheiten des Geräts der Fig. 1,
- Fig. 4: ein Ausführungsbeispiel der zweiten nichtflüchtigen Speichereinheit des Geräts,
- Fig. 5: ein Flussbild zur Verdeutlichung der Vorgänge beim Einschalten des Geräts,
- Fig. 6: ein Flussbild zur Verdeutlichung der Vorgänge beim Initialisieren des Geräts,
- Fig. 7: ein Flussbild zur Verdeutlichung der Vorgänge beim probeweisen Initialisieren von Messfunktionen
und
- Fig. 8: eine schematische Anordnung zur Verdeutlichung einer Variante der Initialisierung von Messfunktionen über die Schnittstelle des Geräts.

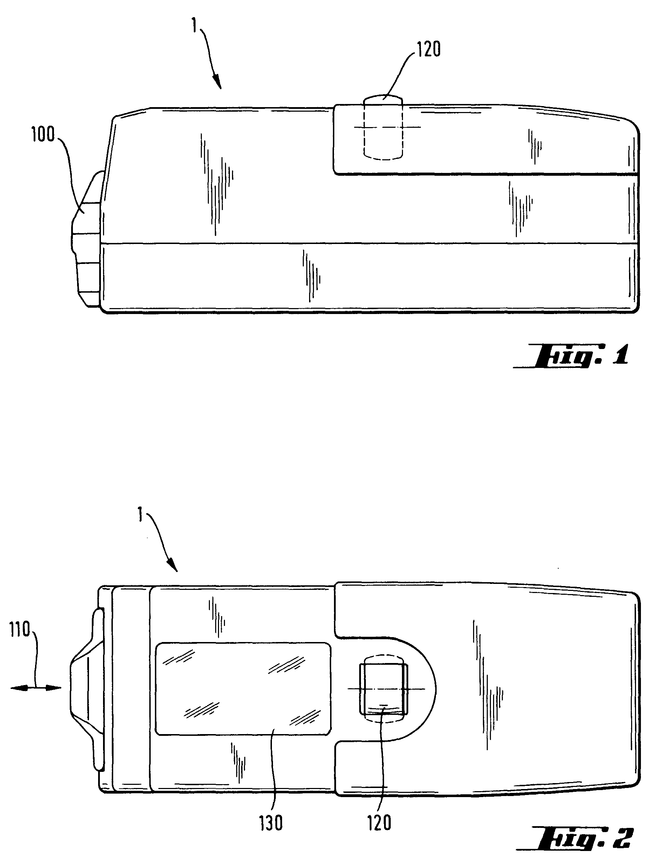

Ein Ausführungsbeispiel eines erfindungsgemässen Geräts ist in Form eines Handgeräts 1 in Fig. 1 in einer Ansicht und in Fig. 2 in einer Aufsicht dargestellt. Man erkennt eine Messeinheit in Form eines Messkopfs 100, welcher zur Durchführung einer Messung in Richtung des Pfeils 110 aus dem Gerät 1 heraus- und wieder hineinfahrbar ausgebildet ist. Im herausgefahrenen Zustand wird ein Messobjekt (nicht dargestellt), z.B. ein Druckbogen, von einer im Messkopf 100 vorgesehenen Lichtquelle beleuchtet und das von dem Druckbogen remittierte Licht wird im Messkopf 100 empfangen und anschliessend ausgewertet. Die Art der Messung (z.B. Dichtemessung), die Auswahl einzelner Parameter der Messung oder auch das Auslösen des Messvorgangs (Herausfahren des Messkopfs etc.) können mit Hilfe eines Handrads 120 als Eingabeeinheit erfolgen und werden jeweils auf einer Anzeigeeinheit, z.B. einem LCD-Display 130, angezeigt. Bei anderen bekannten Geräten können diese Eingaben auch mittels einer Tastatur erfolgen. Die gemessenen Grössen (z.B. Dichten) werden nach der Messung auf dem LCD-Display 130 angezeigt. Soweit entspricht das erfindungsgemässe Handgerät dem Stand der Technik, wie er beispielsweise in der eingangs bereits erwähnten EP-A-0,603,448 beschrieben ist.

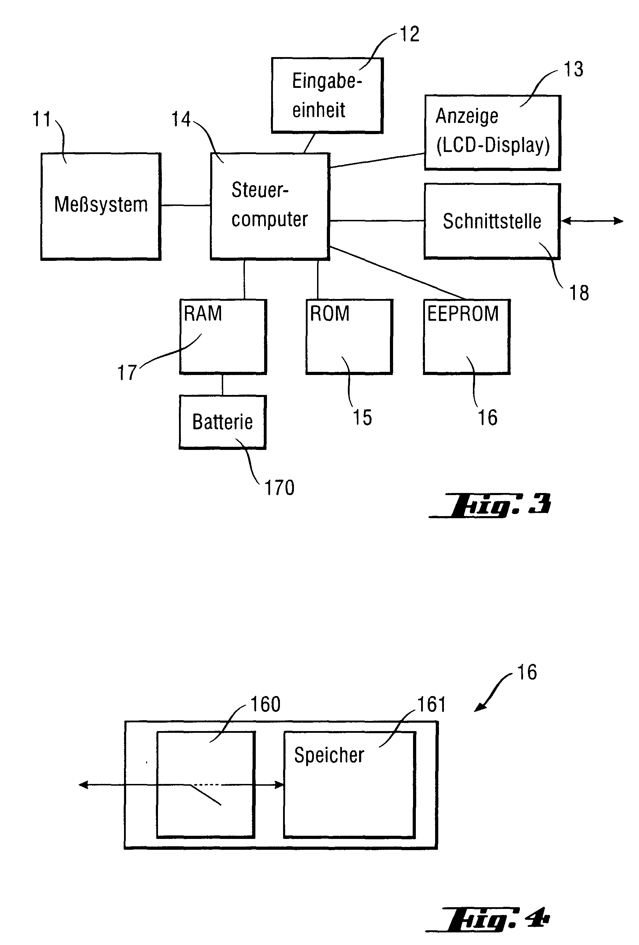

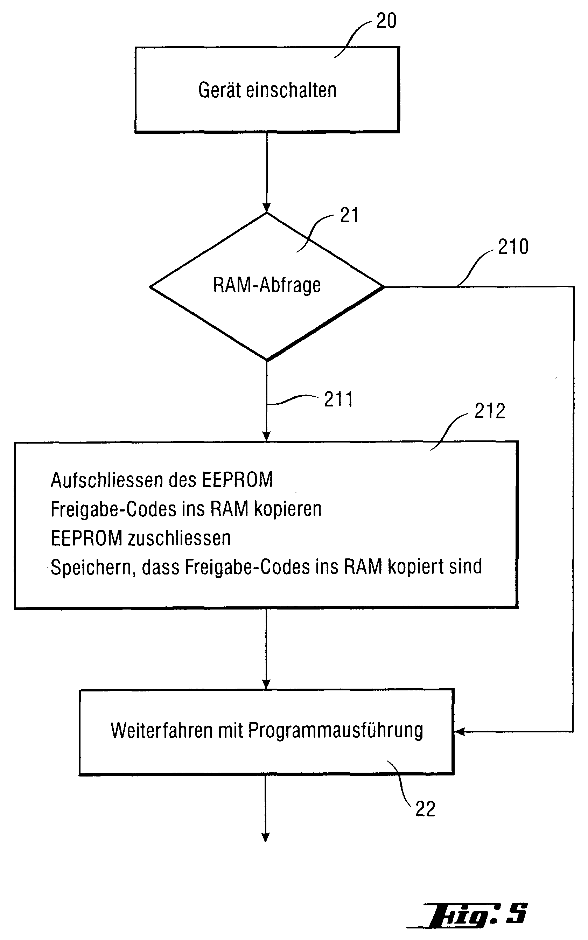

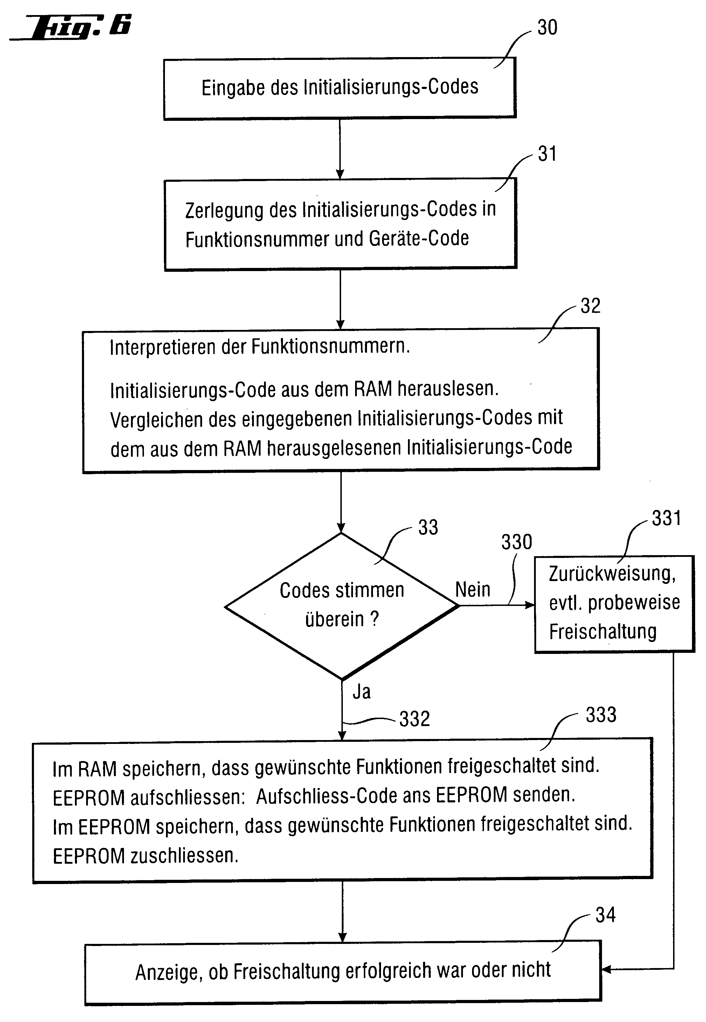

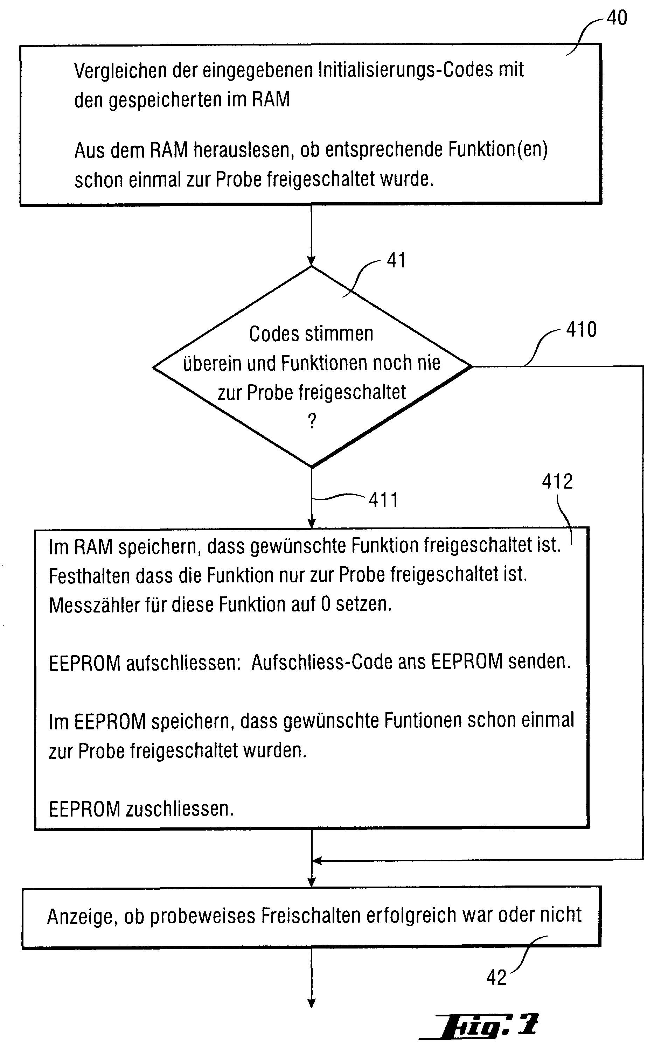

Bei einem solchen Gerät sind nun typischerweise die einzelnen Messfunktionen als Programme in einer ersten nichtflüchtigen Speichereinheit 15, z.B. in einem ROM (Read Only Memory) gespeichert, wie er auch in Fig. 3 dargestellt ist, welche die wesentlichen Einheiten eines Ausführungsbeispiels des erfindungsgemässen Geräts in einem grundsätzlichen Blockschaltbild darstellt. Eine Steuereinheit in Form eines Steuercomputers 14 steuert dabei die gesamten Abläufe in dem Gerät. Ferner umfasst das Gerät eine Eingabeeinheit 12, die in Fig. 1 und Fig. 2 in Form des Handrads 120 realisiert ist. Wie bereits erwähnt kann diese Eingabeeinheit 12 aber auch als Tastatur ausgebildet sein. Darüberhinaus umfasst das Gerät ein Messystem 11, welches dem Stand der Technik entspricht und beispielsweise als Messkopf 110 (Fig. 1, Fig. 2) realisiert sein kann. Ausser dem ROM 15 umfasst das Gerät noch eine zweite nichtflüchtige Speichereinheit 16, z.B. ein EEPROM (Electrically Erasable Programmable ROM), eine mittels einer Batterie 170 gepufferte flüchtige Speichereinheit 17, z.B. ein RAM (Random Access Memory), sowie eine Schnittstelle 18 zur Kommunikation mit externen Geräten.

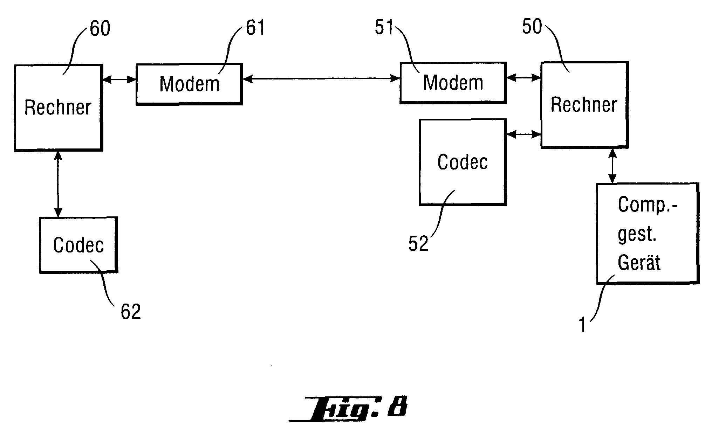

Ein Ausführungsbeispiel für das EEPROM 16 (zweite nichtflüchtige Speichereinheit) ist in Fig. 4 in einem Blockschaltbild dargestellt. Das EEPROM 16 umfasst dabei ein Schloss 160 und einen nichtflüchtigen programmierbaren Speicher 161. Um also auf den Speicher 161 zugreifen zu können, muss also zunächst jedesmal das Schloss 160 mittels eines zugehörigen Schlüssels geöffnet werden.

Die Funktionsweise eines solchen Geräts ist nun folgendermassen: Grundsätzlich sind im ROM 15 alle mit dem Gerät grundsätzlich durchführbaren Messfunktionen in Form von Programmen gespeichert. In dem EEPROM 16 sind nun allerdings je nachdem, welche Messfunktionen das Gerät tatsächlich durchführen können soll, bestimmte Freigabe-Codes gespeichert, die erforderlich sind, um auf die einzelnen Messfunktionen im ROM 15 überhaupt zugreifen zu können. Mit anderen Worten heisst das, dass die Messfunktionen im ROM 15 derart verwaltet werden, dass auf sie überhaupt nur mittels der entsprechenden Freigabe-Codes zugegriffen werden kann. Diese Freigabe-Codes können über den Steuercomputer 14 grundsätzlich jedesmal aus dem EEPROM 16 aufgerufen werden, sie können aber auch beim ersten Einschalten des Geräts in den batteriegepufferten flüchtigen Speicher 17 kopiert werden. Durch die Pufferung des RAM 17 mittels der Batterie 170 bleiben die Freigabe-Codes im RAM 17 erhalten. Dies hat den Vorteil, dass beim Einschalten des Geräts nicht jedesmal das Schloss 160 des EEPROM 16 geöffnet werden muss, sodass es entsprechend schwer wird, den Schlüssel zum Öffnen des Schlosses 160 herauszufinden und das EEPROM 16 unbefugt auszulesen bzw. das EEPROM 16 zu kopieren oder zu modifizieren. Das RAM 17 kann nur sehr schwer manipuliert werden, weshalb für das RAM keine besonderen Schutzmassnahmen vorgesehen sind - allerdings ist auch ein solcher Schutz grundsätzlich denkbar.

Zur Erläuterung, wie die Vorgänge beim Einschalten des Geräts ablaufen, dient Fig. 5. In einem ersten Schritt 20 wird das Gerät eingeschaltet. Danach erfolgt im nächsten Schritt 21 eine RAM-Abfrage, nämlich erstens, ob Freigabe-Codes bereits im RAM 17 gespeichert sind, und zweitens ob eine beim Ausschalten des Geräts berechnete und gespeicherte Prüfsumme korrekt ist. Sind keine Freigabe-Codes im RAM 17 gespeichert, so wird entweder das Gerät zum ersten Mal überhaupt eingeschaltet oder die Freigabe-Codes sind im RAM 17 gelöscht worden. Dies ist insbesondere dann sinnvoll, wenn das EEPROM ausgetauscht werden muss (z.B. wegen eines Defekts). In beiden Fällen wird dann gemäss dem Schritt 212 das Schloss 160 des EEPROM 16 mittels des im ROM 15 gespeicherten Schlüssels aufgeschlossen, der Inhalt des Speichers 161, insbesondere die im Speicher 161 des EEPROM 16 gespeicherten Freigabe-Codes, wird in das RAM 17 kopiert, das Schloss 160 des EEPROM 16 wird wieder zugeschlossen und es wird im RAM 17 gespeichert, dass Freigabe-Codes ins RAM kopiert sind. Erst dann wird mit der weiteren Programmausführung 22 fortgefahren, weil erst dann das Gerät in Bereitschaft ist.

Die gleiche Folge von Schritten erfolgt für den Fall, dass es sich nicht um das erste Einschalten des Geräts handelt, also eine Prüfsumme im RAM 17 gespeichert ist, diese Prüfsumme aber nicht korrekt ist in Bezug auf die Freigabe-Codes, die im RAM 17 gespeichert sind. Dies heisst, dass sich Veränderungen im RAM 17 ergeben haben, die entweder auf Manipulationen zurückzuführen sind oder auf sonstige Ursachen. In jedem Fall erfolgt dann die gleiche Abfolge von Schritten wie im vorigen Absatz beschrieben. Diese beiden Fälle sind durch den Weg 211 und die Schritte 212 in Fig. 5 repräsentiert.

Für den Fall, dass sowohl Freigabe-Codes im RAM 17 gespeichert sind als auch die im RAM 17 gespeicherte Prüfsumme korrekt ist, braucht das Schloss 160 des EEPROM 16 nicht aufgeschlossen zu werden und der Inhalt seines Speichers 161 auch nicht ins RAM 17 kopiert zu werden. Dies ist der Normalfall, der in Fig. 5 durch den Weg 210 repräsentiert ist. In diesem Normalfall braucht also der Schlüssel zum Aufschliessen des Schlosses 160 des EEPROM 16 auch nicht aus dem ROM 15 aufgerufen werden, sodass es im Normalfall erst recht schwer wird, diesen Schlüssel festzustellen, um das EEPROM 16 auszulesen, zu kopieren oder zu manipulieren.

Nach Beschreiten des Wegs 210 bzw. nach Beschreiten des Wegs 211 und der Durchführung der Schritte 212 wird mit der weiteren Programmausführung 22 fortgefahren und beispielsweise das Hauptmenü auf der Anzeigeeinheit 13 dargestellt.

Grundsätzlich ist es möglich, solche Freigabe-Codes im Speicher 161 des EEPROM 16 zu speichern, mit deren Hilfe die Steuerung 14 auf alle Messfunktionen im ROM 15 zugreifen kann. Es ist aber auch möglich, solche Codes zu speichern, mit deren Hilfe auf einzelne Gruppen von Messfunktionen oder auch nur auf einzelne Messfunktionen im ROM 15 zugegriffen werden kann.

Mit Hilfe des Flussdiagramms in Fig. 6 wird gut verständlich, welche Schritte beim Aufrüsten eines Geräts grundsätzlich durchlaufen werden: Zunächst wird mittels der Eingabeeinheit 12 (z.B. mittels des Handrads 120 oder mittels einer Tastatur) in einem ersten Schritt 30 ein Initialisierungs-Code eingegeben. Der Initialisierungs-Code kann alternativ auch über die Schnittstelle 18 von einem externen Rechner zugeführt werden, wie später noch erläutert werden wird. Dieser Initialisierungs-Code wird in einem anschliessenden Schritt 31 in eine Funktionsnummer und einen Gerätecode, der für jedes Gerät unterschiedlich ist, zerlegt. Im nächsten Schritt 32 wird die Funktionsnummer interpretiert, mit anderen Worten gesagt wird festgestellt, welcher Freigabe-Code bzw. welche Freigabe-Codes für welche Funktionen im Initialisierungs-Code vorhanden sind. Weiterhin wird dann der entsprechende Initialisierungs-Code aus dem RAM 17 gelesen. Im gepufferten RAM 17 sind nämlich nach dem Kopieren des Inhalts des Speichers 161 des EEPROM 16 ausser den Freigabe-Codes auch noch die Initialisierungs-Codes für sämtliche überhaupt mit dem Gerät durchführbaren Messfunktionen gespeichert. Der zugeführte Initialisierungs-Code wird nun mit dem im RAM 17 gespeicherten Initialisierungs-Code verglichen.

Sodann wird in einem weiteren Schritt 33 abgefragt, ob der zugeführte Initialisierungs-Code mit dem im RAM 17 gespeicherten Initialisierungs-Code übereinstimmt. Falls dies der Fall ist, wird der Weg 332 beschritten. Es wird dann in einem weiteren Schritt 333 im RAM 17 ein Freigabe-Code gespeichert, mittels dem es möglich ist, über die Steuerung 14 auf die zusätzlich gewünschten Messfunktionen im ROM 15 zuzugreifen, also dass die zusätzlich gewünschten Messfunktionen "freigeschaltet" sind. Danach wird das Schloss 160 des EEPROM 16 aufgeschlossen, indem der Schlüssel ("Aufschliess-Code") zum Schloss des EEPROM 16 gesandt wird. Sodann wird auch im EEPROM 16 ein Freigabe-Code gespeichert, mittels dem es möglich ist, über die Steuerung 14 auf die zusätzlich gewünschten Messfunktionen im ROM 15 zuzugreifen, mit anderen Worten gesagt wird im EEPROM 16 gespeichert, dass die zusätzlich gewünschten Messfunktionen "freigeschaltet" sind. Anschliessend wird das Schloss 160 des EEPROM 16 wieder verschlossen.

Für den Fall, dass die beiden Initialisierungs-Codes nicht übereinstimmen, also die Abfrage im Schritt 33 negativ beantwortet wird, wird der Weg 330 beschritten. In einem weiteren Schritt 331 wird dann entweder die "Freischaltung" zusätzlicher Messfunktionen zurückgewiesen, oder eventuell werden alternativ bestimmte zusätzliche Messfunktionen zur Probe "freigeschaltet". Diese "Freischaltung" erfolgt dann wie nachstehend beschrieben.

In beiden Fällen, sowohl wenn also eine "Freischaltung" bestimmter Messfunktionen erfolgt wie auch für den Fall, dass die "Freischaltung" zurückgewiesen wird oder nur probeweise erfolgt, wird anschliessend in einem weiteren Schritt 34 dem Benutzer auf der Anzeigeeinheit 13 angezeigt, ob die Aufrüstung erfolgreich gewesen ist oder nicht oder ob bestimmte Messfunktionen probeweise freigeschaltet worden sind.

Diese Vorgehensweise ermöglicht ein einfaches Aufrüsten des Geräts, ohne dass das Gerät für längere Zeit zum Hersteller eingeschickt werden muss. Der Benutzer, der sein Gerät aufrüsten möchte, muss lediglich dafür Sorge tragen, dass seinem Gerät die richtigen Initialisierungs-Codes zugeführt werden. Dies kann entweder derart erfolgen, dass er die Initialisierungs-Codes beim Hersteller direkt bestellt, wodurch der jeweilige Benutzer erfasst wird und diesem eine entsprechende Rechnung gestellt werden kann. Dem Benutzer kann aber auch z.B. gratis zunächst einmal ein Initialisierungs-Code überlassen werden, der es ermöglicht auf eine zusätzlich gewünschte Messfunktion für eine vorher bestimmte Anzahl probeweise zugreifen zu können. Dies kann so erfolgen, wie es im folgenden anhand des Flussbilds der Fig. 7 erläutert wird.

Zu diesem Zweck wird in einem ersten Schritt 40 ein Initialisierungs-Code dem Gerät zugeführt. Der zugeführte Initialisierungs-Code wird mit dem entsprechenden Initialisierungs-Code, der im RAM 17 gespeichert ist, verglichen. Ausserdem wird aus dem RAM 17 herausgelesen, ob die gewünschte Messfunktion schon einmal probeweise freigeschaltet worden ist.

Im nächsten Schritt 41 erfolgt die Abfrage, ob der zugeführte Initialisierungs-Code mit dem im RAM 17 gespeicherten Initialisierungs-Code übereinstimmt und ob ausserdem die zusätzlichen Messfunktionen nicht vorher schon einmal probeweise "freigeschaltet" worden sind, damit vermieden werden kann, dass ein Benutzer mehrmals bestimmte Messfunktionen probeweise gratis erhält.

Werden beide Fragen im Schritt 41 positiv beantwortet, stimmen also die Initialisierungs-Codes überein und waren die zusätzlichen Messfunktionen nicht vorher schon einmal probeweise "freigeschaltet", so wird der Weg 411 beschritten. In einem nachfolgenden Schritt 412 wird dann im RAM 17 gespeichert, dass die zusätzlichen Messfunktionen "freigeschaltet" sind. Weiterhin wird im RAM 17 festgehalten, dass die zusätzlichen Messfunktionen probeweise "freigeschaltet" ist (dass also mittels eines entsprechenden Freigabe-Codes auf die im ROM 15 gespeicherte Messfunktion probeweise zugegriffen werden kann). Ausserdem wird ein Zähler für diese Messfunktionen auf "0" gesetzt. Dieser Zähler wird bei jedem Zugriff auf diese zusätzlichen Funktionen inkrementiert. Weiterhin wird anschliessend das Schloss 160 des EEPROM 16 aufgeschlossen, indem der Schlüssel aus dem ROM 15 zum Schloss 160 des EEPROM 16 gesandt wird. Im Speicher 161 der EEPROM 16 wird nun gespeichert, dass die zusätzlich gewünschten Funktionen schon einmal zur Probe freigeschaltet worden sind. Schliesslich wird das Schloss 160 des EEPROM 16 wieder verschlossen.

Wird nur eine der Fragen im Schritt 41 negativ beantwortet, stimmen also entweder die Initialisierungs-Codes nicht überein oder sind die probeweise zusätzlich gewünschten Messfunktionen schon einmal probeweise "freigeschaltet" gewesen, so wird der Weg 410 beschritten und die probeweise zusätzlich gewünschten Messfunktionen werden nicht "freigeschaltet".

In beiden Fällen, also beim erfolgreichen probeweisen "Freischalten" wie auch beim erfolglosen Versuch wird in einem Schritt 42 das Resultat auf der Anzeigeeinheit 13 angezeigt.

Bisher ist die Variante diskutiert worden, dass der Benutzer selbst die Initialisierungs-Codes vom Hersteller des Geräts erhält bzw. sie dort erfragt und die Initialisierungs-Codes dann selbst dem Gerät zuführt (z.B. per Handrad 120 oder über eine Tastatur). Das Aufrüsten eines Geräts kann aber auch derart erfolgen, dass der Benutzer sein Gerät zu der entsprechenden Vertretung vor Ort bringt und dass die Aufrüstung des Geräts dort erfolgt. Dabei kann die Aufrüstung des Geräts so erfolgen, wie es nachfolgend anhand von Fig. 8 erläutert wird.

Der Benutzer bringt sein Gerät zu der Vertretung vor Ort und teilt der Vertretung mit, welche zusätzlichen Messfunktionen er gerne mit seinem Gerät durchführen möchte. Die Vertretung vor Ort schliesst das Gerät über die Schnittstelle 18 an einen ersten Rechner 50 an. Der erste Rechner 50 ist über ein Modem 51 und über ein weiteres Modem 61 mit einem zweiten Rechner 60 verbunden. Dieser zweite Rechner 60 steht beim Gerätehersteller. Im Speicher dieses zweiten Rechners 60 sind sämtliche Initialisierungs-Codes, Freigabe-Codes, Gerätecodes etc. für jedes einzelne hergestellte Gerät 1 gespeichert. Nachdem sich der erste Rechner 50 - und damit die Vertretung - identifiziert hat und dem zweiten Rechner 60 die Gerätenummer mitgeteilt hat und erklärt hat, welche zusätzlichen Messfunktionen mit dem angeschlossenen Gerät durchführbar sein sollen, werden die entsprechenden Initialisierungs-Codes aus dem Speicher des zweiten Rechners 60 aufgerufen und über das Modem 61, über eine Verbindungsleitung (z.B. eine Telefonleitung) und das Modem 51 an den ersten Rechner 50 übertragen. Von dort werden sie dem Gerät 1 über die Schnittstelle 18 zugeführt, und die Messfunktionen werden in der bereits erläuterten Art und Weise initialisiert.

Durch die Tatsache, dass sich der erste Rechner 50 zuerst beim zweiten Rechner 60 identifizieren muss, bevor die entsprechenden Initialisierungs-Codes aus dem Speicher des zweiten Rechners 60 aufgerufen und zum ersten Rechner 50 übertragen werden, ist auch eine automatische Rechnungsstellung an die Vertretung möglich, da dem beim Gerätehersteller stehenden zweiten Rechner 60 der erste Rechner 50 der Vertretung nach seiner Identifizierung bekannt ist und der Gerätehersteller somit weiss, an wen er die Rechnung stellen muss. Vor Ort rechnet dann die Vertretung mit dem jeweiligen Benutzer ab, dessen Gerät aufgerüstet worden ist.

Damit auf die Initialisierungs-Codes nicht unbefugt zugegriffen werden kann, können die Initialisierungs-Codes, die im Speicher des zweiten Rechners 60 gespeichert sind, verschlüsselt übertragen werden. Die Initialisierungs-Codes werden also entweder nach der Identifizierung des ersten Rechners 50 beim zweiten Rechner 60 zunächst mittels eines mit dem zweiten Rechner verbundenen Codec 62 verschlüsselt und in verschlüsselter Form über das Modem 61 und das Modem 51 zum ersten Rechner 50 übertragen. Alternativ sind die Initialisierungs-Codes bereits vor dem Speichern mittels des Codec 62 verschlüsselt worden und sind in verschlüsselter Form im Speicher des Rechners 60 gespeichert. Nach dem Übertragen der verschlüsselten Initialisierungs-Codes zum ersten Rechner 50 werden die verschlüsselten Initialisierungs-Codes mit Hilfe eines mit dem ersten Rechner 50 verbundenen weiteren Codec 52 wieder entschlüsselt und dem Gerät 1 über die Schnittstelle 18 in unverschlüsselter Form zugeführt.

Sollte irgendjemand auf dem Übertragungsweg vom zweiten Rechner 60 zum ersten Rechner 50 die Intialisierungs-Codes abhören, so kann nur derjenige die Initialisierungs-Codes verwerten, der ausser dem entsprechenden Gerät 1 (die Initialisierungs-Codes sind ja alle für jedes Gerät unterschiedlich) auch noch über einen entsprechenden Codec 52 zum Entschlüsseln der verschlüsselt übertragenen Initialisierungs-Codes verfügt. Dies erhöht die Sicherheit beim Übertragen der Initialisierungs-Codes.

Die Variante, das Gerät 1 auf diese Weise aufrüsten zu können, bietet sich insbesondere für Grosskunden wie Vertretungen an, da die Vertretung dann auch über den Codec 52 und einen entsprechenden Rechner verfügen muss. Grundsätzlich wäre sie aber auch für grössere Privatkunden denkbar.

Die Speicherung sämtlicher Initialisierungs-Codes, sämtlicher Freigabe-Codes, Gerätecodes etc., beim Gerätehersteller hat auch den Vorteil, dass es dann, wenn z.B. das EEPROM 16 einmal defekt ist, das alte EEPROM wieder reproduziert werden kann. Tauscht der Service-Techniker das EEPROM 16 aus, so kann er über die Eingabeeinheit 12 eingeben, dass keine Freigabe-Codes im RAM 17 gespeichert sind. Es erfolgt dann die bereits weiter oben beschriebene Vorgehensweise beim Einschalten des Geräts 1. Ist hingegen nur der Steuercomputer 14 defekt, so kann einfach ein neuer Steuercomputer eingesetzt werden, ohne dass dabei aufwendige weitere Massnahmen erforderlich werden. Ebenso kann das ROM 15, in welchem ja grundsätzlich immer alle Messfunktionen gespeichert sind, problemlos ausgetauscht werden. Um zukünftige Programmversionen ebenfalls verwenden zu können, muss lediglich das Kommunikationsprotokoll mit dem EEPROM 16 immer genau gleich sein.

Was die probeweise "Freigabe" bestimmter Messfunktionen betrifft, soll noch bemerkt werden, dass dies grundsätzlich auf die gleiche Art erfolgen kann wie bei der definitiven "Freigabe" bestimmter Messfunktionen. Allerdings können die Initialisierungs-Codes für die probeweise "Freigabe" von Messfunktionen auch im ROM 15 gespeichert und bei allen Geräten gleich sein, um die Verwaltung der Initialisierungs-Codes für die probeweise "Freigabe" von Messfunktionen zu vereinfachen.

## Patentansprüche

1. Computergesteuertes Gerät (1) zur Erfassung optischer Transmissions- und/oder Remissionseigenschaften eines Messobjekts, mit:
a) einer Messeinheit (100) zum Beleuchten des Messobjekts und zum Empfangen des durch das Messobjekt transmittierten und/oder vom Messobjekt remittierten Lichts;
b) einer Eingabeeinheit (120) zur Auswahl der Art der gewünschten Messung, zur Eingabe von Parametern oder zur Auslösung der Messung;
c) einer Anzeigeeinheit (130) zum Anzeigen der gemessenen Grössen;
d) einer ersten nichtflüchtigen Speichereinheit (15), in der die Messfunktionen des Geräts (1) gespeichert sind; und
e) einer Steuereinheit (14) zum Steuern aller Vorgänge im Gerät (1);
gekennzeichnet durch
f) eine zweite nichtflüchtige Speichereinheit (16; 160, 161) zum Speichern von Freigabe-Codes, welche einzelnen Messfunktionen zugeordnet sind, mit deren Hilfe die Steuereinheit (14) auf die Messfunktionen in der ersten nichtflüchtigen Speichereinheit (15) zugreifen kann.

2. Computergesteuertes Gerät nach Anspruch 1, dadurch gekennzeichnet, dass in der ersten nichtflüchtigen Speichereinheit alle mit dem Gerät durchführbaren Messfunktionen gespeichert sind, und dass in der zweiten nichtflüchtigen Speichereinheit Freigabe-Codes gespeichert sind, mit deren Hilfe die Steuerung auf bestimmte, ausgewählte Messfunktionen in der ersten nichtflüchtigen Speichereinheit zugreift.

3. Computergesteuertes Gerät nach einem der Ansprüche 1 oder 2, dadurch gekennzeichnet, dass die zweite nichtflüchtige Speichereinheit als elektrisch löschbarer, programmierbarer Speicher ausgebildet ist.

4. Computergesteuertes Gerät nach einem der Ansprüche 1 bis 3, dadurch gekennzeichnet, dass die zweite nichtflüchtige Speichereinheit als verschliessbare Speichereinheit ausgebildet ist, auf deren Inhalt nur mittels eines Schlüssels zugegriffen werden kann.

5. Computergesteuertes Gerät nach einem der Ansprüche 1 bis 4, dadurch gekennzeichnet, dass es eine batteriegepufferte flüchtige Speichereinheit aufweist, in welche die Steuerung beim Initialisieren des Geräts die Freigabe-Codes aus der zweiten nichtflüchtigen Speichereinheit hineinlädt.

6. Computergesteuertes Gerät nach einem der Ansprüche 1 bis 5, dadurch gekennzeichnet, dass es eine Schnittstelle zur Kommunikation mit externen Geräten aufweist.

7. Verfahren zum Betrieb eines computergesteuerten Geräts zur Erfassung optischer Transmissions- und/oder Remissionseigenschaften eines Messobjekts, bei welchem Verfahren das Messobjekt beleuchtet und das durch das Messobjekt transmittierte und/oder vom Messobjekt remittierte Licht empfangen wird, bei welchem Verfahren die Art der gewünschten Messung, Parameter der Messung oder ein Signal zur Auslösung der Messung eingegeben wird, und bei welchem Verfahren die gemessenen Grössen angezeigt werden, wobei mittels einer Steuereinheit, mit der sämtliche Vorgänge im Gerät gesteuert werden, auf Messfunktionen zugegriffen wird, die in einer ersten nichtflüchtigen Speichereinheit gespeichert sind, dadurch gekennzeichnet, dass mittels der Steuereinheit aus einer zweiten nichtflüchtigen Speichereinheit Freigabe-Codes aufgerufen werden, mit deren Hilfe auf die in der ersten nichtflüchtigen Speichereinheit gespeicherten Messfunktionen zugegriffen wird.

8. Verfahren nach Anspruch 7, dadurch gekennzeichnet, dass mittels der Steuereinheit aus der zweiten nichtflüchtigen Speichereinheit Freigabe-Codes aufgerufen werden, mit deren Hilfe auf ausgewählte in der ersten nichtflüchtigen Speichereinheit gespeicherte Messfunktionen zugegriffen wird.

9. Verfahren nach einem der Ansprüche 7 und 8, dadurch gekennzeichnet, dass beim Einschalten des Geräts mittels der Steuereinheit geprüft wird, ob auf sämtliche Messfunktionen mit Hilfe der Freigabe-Codes, die in der zweiten nichtflüchtigen Speichereinheit gespeichert sind, zugegriffen werden kann, und falls dies nicht der Fall ist, dass dann mittels der Steuerung die in der zweiten nichtflüchtigen Speichereinheit gespeicherten Freigabe-Codes aufgerufen werden, sodass anschliessend auf sämtliche Messfunktionen aus der ersten nichtflüchtigen Speichereinheit zugegriffen werden kann, für die in der zweiten nichtflüchtigen Speichereinheit Freigabe-Codes gespeichert sind.

10. Verfahren nach einem der Ansprüche 7 bis 9, dadurch gekennzeichnet, dass die Freigabe-Codes in der zweiten nichtflüchtigen Speichereinheit verschlossen gespeichert sind, und dass auf sie nur mittels eines Schlüssels zugegriffen werden kann.

11. Verfahren nach einem der Ansprüche 7 bis 10, dadurch gekennzeichnet, dass mittels der Steuereinheit bestimmte in der zweiten nichtflüchtigen Speichereinheit gespeicherte Freigabe-Codes aufgerufen werden, mit deren Hilfe auf ausgewählte Messfunktionen in der ersten nichtflüchtigen Speichereinheit probeweise zugegriffen wird, wobei jeder einzelne probeweise Zugriff auf diese ausgewählten Messfunktionen gezählt wird und nach einer vorher festgelegten Anzahl von probeweisen Zugriffen diese ausgewählten Messfunktionen wieder gesperrt werden.

12. Verfahren nach Anspruch 11, dadurch gekennzeichnet, dass jedesmal vor einem probeweisen Zugriff auf eine ausgewählte Messfunktion mittels der Steuereinheit überprüft wird, ob auf diese Messfunktion schon früher einmal für eine festgelegte Anzahl zugegriffen worden ist, und dass in diesem Fall auf eine solche Messfunktion nicht noch ein weiteres Mal probeweise zugegriffen wird.

13. Verfahren zur Initialisierung von Messfunktionen eines computergesteuerten Geräts zur Erfassung optischer Transmissions- und/oder Remissionseigenschaften eines Messobjekts, wobei mittels einer Steuereinheit auf die in einer ersten nichtflüchtigen Speichereinheit gespeicherten Messfunktionen zugegriffen wird, dadurch gekennzeichnet, dass durch die Zuführung eines gerätespezifischen Initialisierungs-Codes in eine zweite nichtflüchtige Speichereinheit Freigabe-Codes gespeichert werden, mit deren Hilfe beim Betrieb des Geräts mittels der Steuereinheit auf die jeweiligen Messfunktionen in der ersten nichtflüchtigen Speichereinheit zugegriffen wird.

14. Verfahren nach Anspruch 13, dadurch gekennzeichnet, dass der Initialisierungs-Code mit Hilfe einer Eingabeeinheit manuell eingegeben wird.

15. Verfahren nach Anspruch 13, dadurch gekennzeichnet, dass der Initialisierungs-Code über eine Schnittstelle zur Kommunikation mit externen Geräten zugeführt wird.

16. Verfahren nach Anspruch 15, dadurch gekennzeichnet, dass das computergesteuerte Gerät über die Schnittstelle mit einem ersten Rechner verbunden wird, dass eine Verbindung von diesem ersten Rechner zu einem zweiten Rechner hergestellt wird, in dessen nichtflüchtigem Speicher alle Initialisierungs-Codes für jedes einzelne Gerät gespeichert sind, dass der gewünschte Intialisierungs-Code nach der Identifizierung des ersten Rechners aus dem nichtflüchtigen Speicher des zweiten Rechners über die Verbindung zum ersten Rechner übertragen wird und von dort über die Schnittstelle dem computergesteuerten Gerät zugeführt wird, wodurch die zweite nichtflüchtige Speichereinheit geöffnet wird und in diese Speichereinheit hinein Freigabe-Codes gespeichert werden.

17. Verfahren nach Anspruch 16, dadurch gekennzeichnet, dass vor dem Übertragen des Initialisierungs-Codes vom zweiten zum ersten Rechner der Inititalisierungs-Code verschlüsselt wird, und dass der verschlüsselt übertragene Initialisierungs-Code nach dem Übertragen wieder entschlüsselt wird, bevor er in unverschlüsselter Form über die Schnittstelle dem computergesteuerten Gerät zugeführt wird.

18. Verfahren nach einem der Ansprüche 13 bis 17, dadurch gekennzeichnet, dass dem Gerät ein Initialisierungs-Code zugeführt wird, durch den in der zweiten nichtflüchtigen Speichereinheit des Geräts Freigabe-Codes gespeichert werden, mit deren Hilfe auf bestimmte Messfunktionen in der ersten nichtflüchtigen Speichereinheit zugegriffen wird.

19. Verfahren nach einem der Ansprüche 13 bis 18, dadurch gekennzeichnet, dass dem Gerät ein Initialisierungs-Code zugeführt wird, durch den in die zweite nichtflüchtige Speichereinheit Freigabe-Codes gespeichert werden, mit deren Hilfe auf ausgewählte Messfunktionen in der ersten nichtflüchtigen Speichereinheit probeweise zugegriffen wird, wobei jeder einzelne probeweise Zugriff auf diese Messfunktionen gezählt wird und nach einer vorher festgelegten Anzahl von probeweisen Zugriffen diese ausgewählten Messfunktionen wieder gesperrt werden.

## Claims

1. Computer-controlled appliance (1) for recording optical transmission and/or diffuse reflection properties of a measurement object, having:
a) a measurement unit (100) for illuminating the measurement object and for receiving the light transmitted through the measurement object and/or diffusely reflected from the measurement object;
b) an input unit (120) for selecting the type of measurement desired, for inputting parameters or for initiating the measurement;
c) a display unit (130) for displaying the measured parameters;
d) a first permanent memory unit (15) in which the measurement functions of the appliance (1) are stored; and
e) a control unit (14) for controlling all the procedures in the appliance (1);
characterised in that
f) a second permanent memory unit (16, 160, 161) for storing release codes which are associated with individual measurement functions, by means of which second unit the control unit (14) can access the measurement functions in the first permanent memory unit (15).

2. Computer-controlled appliance according to Claim 1, characterised in that all the measurement functions which can carried out by means of the appliance are stored in the first permanent memory unit, and in that release codes, by means of which the control system accesses certain selected measurement functions in the first permanent memory unit, are stored in the second permanent memory unit.

3. Computer-controlled appliance according to one of Claims 1 or 2, characterised in that the second permanent memory unit is configured as an electrically erasable, programmable memory.

4. Computer-controlled appliance according to one of Claims 1 to 3, characterised in that the second permanent memory unit is configured as a lockable memory unit whose contents can only be accessed by means of a key.

5. Computer-controlled appliance according to one of Claims 1 to 4, characterised in that it has a battery-buffered non-permanent control unit, into which the control loads release codes from the second permanent memory unit during initialisation.

6. Computer-controlled appliance according to one of Claims 1 to 5, characterised in that it has an interface for communication with external appliances.

7. Method of operating a computer-controlled appliance for recording optical transmission and/or diffused reflection properties of a measurement object, in which method the measurement object is illuminated and the light transmitted through the measurement object and/or diffusely reflected by the measurement object is received, in which process the type of the desired measurement, parameters of the measurement or the signal for initiating the measurement is input, and in which method the measured parameters are displayed, measurement functions which are stored in a first permanent memory unit being accessed by means of a control unit by which all the procedures in the appliance are controlled, characterised in that release codes, by means of which access is obtained to the measurement functions stored in the first permanent memory unit, are invoked from a second permanent memory unit by means of the control unit.

8. Method according to Claim 7, characterised in that release codes, by means of which selected measurement functions stored in the first permanent memory unit are accessed, are invoked from the second permanent memory unit by means of the control unit.

9. Method according to one of Claims 7 and 8, characterised in that when the appliance is switched on, the control unit checks whether all the measurement functions can be accessed by means of the release codes which are stored in the second permanent memory unit and, if this is not the case, the release codes stored in the second permanent memory unit are invoked by means of the control system so that, subsequently, all the measurement functions from the first permanent memory unit and for which release codes are stored in the second permanent memory unit, can be accessed.

10. Method according to one of Claims 7 to 9, characterised in that the release codes are stored so that they are locked in the second permanent memory unit, and in that they can only be accessed by means of a key.

11. Method according to one of Claims 7 to 10, characterised in that certain release codes stored in the second permanent memory unit and by means of which selected measurement functions in the first permanent memory unit can be accessed on approval, are invoked by means of the control unit, each individual access on approval to these selected measurement functions being counted and, after a previously specified number of accesses on approval, these selected measurement functions are again blocked.

12. Method according to Claim 11, characterised in that before each access on approval to a selected measurement function, the control unit checks whether there has already been a fixed number of accesses to this measurement function on some occasion and in that, in this case, access on approval to such a measurement function cannot be obtained a further time.

13. Method for initialising measurement functions of a computer-controlled appliance for recording optical transmission and/or diffuse reflection properties of a measurement object, measurement functions stored in a first permanent memory unit being accessed by means of a control unit, characterised in that release codes, by means of which the respective measurement functions in the first permanent memory unit are accessed by means of the control unit during operation of the appliance, are stored in a second permanent memory unit by the supply of an initialisation code specific to the appliance.

14. Method according to Claim 13, characterised in that the initialisation code is manually input by means of an input unit.

15. Method according to Claim 13, characterised in that the initialisation code is supplied via an interface for communication with external appliances

16. Method according to Claim 15, characterised in that the computer-controlled appliance is connected via the interface with a first computer, in that a connection is produced from this first computer to a second computer in whose permanent memory all initialisation codes for each individual appliance are stored, in that the desired initialisation code is transmitted, after the identification of the first computer, from the permanent memory of the second computer via the connection to the first computer and is supplied from there to the computer-controlled appliance via the interface, by which means the second permanent memory unit is opened and release codes are stored in this memory unit.

17. Method according to Claim 16, characterised in that the initialisation code is encoded before transmission of the initialisation code from the second to the first computer, and in that the encoded initialisation code transmitted is decoded again after transmission before it is supplied in uncoded form via the interface to the computer-controlled appliance.

18. Method according to one of Claims 13 to 17, characterised in that an initialisation code is supplied to the appliance, which initialisation code permits release codes, by means of which certain measurement functions can be accessed in the first permanent memory unit, to be stored in the second permanent memory unit of the appliance.

19. Method according to one of Claims 13 to 18, characterised in that an initialisation code is supplied to the appliance, which permits initialisation code release codes to stored in the second permanent memory unit, by means of which release codes selected measurement functions are accessed on approval in the first permanent memory unit, each individual access on approval to these measurement functions being counted and, after a previously specified number of accesses on approval, these selected measurement functions are again blocked.

## Revendications

1. Appareil (1) commandé par ordinateur pour l'enregistrement de caractéristiques optiques de transmission et/ou de luminance de réflexion d'un objet mesuré, comprenant :
a) une unité de mesure (100) pour éclairer l'objet de mesure et pour capter la lumière transmise à travers l'objet de mesure et/ou réfléchie par l'objet de mesure ;
b) une unité d'entrée (120) pour sélectionner le type de mesure souhaitée, pour entrer des paramètres ou pour déclencher la mesure ;
c) une unité d'affichage (130) pour afficher les grandeurs mesurées ;
d) une première unité de mémoire non volatile (15) dans laquelle les fonctions de mesure de l'appareil (1) sont mémorisées ; et
e) une unité de commande (14) pour commander tous les processus dans l'appareil (1) ;
caractérisé par
f) une seconde unité de mémoire non volatile (16 ; 160, 161) pour mémoriser des codes de validation, lesquels sont associés à différentes fonctions de mesure qui permettent à l'unité de commande (14) d'accéder aux fonctions de mesure dans la première unité de mémoire non volatile (15).

2. Appareil commandé par ordinateur selon la revendication 1, caractérisé en ce que dans la première unité de mémoire non volatile sont mémorisées toutes les fonctions de mesure réalisables avec l'appareil, et en ce que dans la seconde unité de mémoire non volatile sont mémorisés des codes de validation qui permettent au module de commande d'accéder à certaines fonctions de mesure sélectionnées dans la première unité de mémoire non volatile.

3. Appareil commandé par ordinateur selon l'une des revendications 1 ou 2, caractérisé en ce que la seconde unité de mémoire non volatile est conçue sous la forme d'une mémoire programmable effaçable électriquement.

4. Appareil commandé par ordinateur selon l'une des revendications 1 à 3, caractérisé en ce que la seconde unité de mémoire non volatile est conçue sous la forme d'une unité de mémoire verrouillable dont le contenu ne peut être accédé qu'au moyen d'une clé.

5. Appareil commandé par ordinateur selon l'une des revendications 1 à 4, caractérisé en ce qu'il comporte une unité de mémoire volatile protégée par batterie, dans laquelle le module de commande charge les codes de validation provenant de la seconde unité de mémoire non volatile lors de l'initialisation de l'appareil.

6. Appareil commandé par ordinateur selon l'une des revendications 1 à 5, caractérisé en ce qu'il comporte une interface de communication avec des appareils extérieurs.

7. Procédé pour faire fonctionner un appareil commandé par ordinateur pour l'enregistrement de caractéristiques optiques de transmission et/ou de luminance de réflexion d'un objet mesuré, procédé dans lequel l'objet de mesure est éclairé et la lumière transmise à travers l'objet de mesure et/ou réfléchie par l'objet de mesure est captée, dans lequel le type de mesure souhaitée, des paramètres de la mesure ou un signal pour déclencher la mesure sont entrés, et dans lequel les grandeurs mesurées sont affichées, une unité de commande apte à commander tous les processus dans l'appareil permettant d'accéder à des fonctions de mesure qui sont mémorisées dans une première unité de mémoire non volatile, caractérisé en ce que l'unité de commande sert à appeler, dans une seconde unité de mémoire non volatile, des codes de validation qui permettent d'accéder aux fonctions de mesure mémorisées dans la première unité de mémoire non volatile.

8. Procédé selon la revendication 7, caractérisé en ce que des codes de validation permettant d'accéder à des fonctions de mesure sélectionnées mémorisées dans la première unité de mémoire non volatile sont appelés dans la seconde unité de mémoire non volatile à l'aide de l'unité de commande.

9. Procédé selon l'une des revendications 7 et 8, caractérisé en ce que, lors de la mise en marche de l'appareil, on vérifie à l'aide de l'unité de commande si toutes les fonctions de mesure peuvent être accédées à l'aide des codes de validation mémorisés dans la seconde unité de mémoire non volatile et, si ce n'est pas le cas, en ce que les codes de validation mémorisés dans la seconde unité de mémoire non volatile sont appelés à l'aide du module de commande, de façon à pouvoir accéder ensuite à toutes les fonctions de mesure qui sont enregistrées dans la première unité de mémoire non volatile et pour lesquelles des codes de validation sont mémorisés dans la seconde unité de mémoire non volatile.

10. Procédé selon l'une des revendications 7 à 9, caractérisé en ce que les codes de validation sont mémorisés sous forme verrouillée dans la seconde unité de mémoire non volatile, et en ce qu'ils ne peuvent être accédés qu'à l'aide d'une clé.

11. Procédé selon l'une des revendications 7 à 10, caractérisé en ce que certains codes de validation qui sont mémorisés dans la seconde unité de mémoire non volatile et qui permettent d'accéder à titre d'essai à des fonctions de mesure sélectionnées dans la première unité de mémoire non volatile sont appelés à l'aide de l'unité de commande, chacun des accès d'essai auxdites fonctions de mesure sélectionnées étant compté et, au bout d'un nombre préalablement fixé d'accès d'essai, lesdites fonctions de mesure sélectionnées étant à nouveau verrouillées.

12. Procédé selon la revendication 11, caractérisé en ce que, avant chaque accès d'essai à une fonction de mesure sélectionnée, on contrôle au moyen de l'unité de commande si antérieurement lesdites fonctions de mesure ont déjà été accédées un nombre de fois fixé, et en ce que, dans ce cas, ladite fonction de mesure ne fait pas l'objet d'un nouvel accès d'essai.

13. Procédé pour initialiser des fonctions de mesure d'un appareil commandé par ordinateur pour l'enregistrement de caractéristiques optiques de transmission et/ou de luminance de réflexion d'un objet mesuré, procédé consistant à accéder, au moyen d'une unité de commande, aux fonctions de mesure mémorisées dans une première unité de mémoire non volatile, caractérisé en ce que l'envoi d'un code d'initialisation spécifique à l'appareil permet de mémoriser, dans une seconde unité de mémoire non volatile, des codes de validation qui, lors du fonctionnement de l'appareil, permettent d'accéder aux fonctions de mesure correspondantes de la première unité de mémoire non volatile à l'aide de l'unité de commande.

14. Procédé selon la revendication 13, caractérisé en ce que le code d'initialisation peut être entré manuellement à l'aide d'une unité d'entrée.

15. Procédé selon la revendication 13, caractérisé en ce que le code d'initialisation est envoyé par l'intermédiaire d'une interface de communication avec des appareils extérieurs.

16. Procédé selon la revendication 15, caractérisé en ce que l'appareil commandé par ordinateur est connecté par l'intermédiaire de l'interface à un premier calculateur, en ce qu'une connexion est établie entre ledit premier calculateur et un second calculateur, dans la mémoire non volatile duquel sont mémorisés tous les codes d'initialisation pour chacun des appareils, en ce que, après identification du premier calculateur, le code d'initialisation souhaité est transféré, par l'intermédiaire de l'interface, de la mémoire non volatile du second calculateur au premier calculateur et, de là, par l'intermédiaire de l'interface, est envoyé à l'appareil commandé par ordinateur, ce qui a pour effet d'ouvrir la seconde unité de mémoire non volatile et d'y mémoriser des codes de validation.

17. Procédé selon la revendication 16, caractérisé en ce que, avant le transfert du code d'initialisation du second au premier calculateur, le code d'initialisation est crypté, et en ce que le code d'initialisation transmis sous forme cryptée est à nouveau décrypté après le transfert avant d'être envoyé sous forme non cryptée à l'appareil commandé par ordinateur par l'intermédiaire de l'interface.

18. Procédé selon l'une des revendications 13 à 17, caractérisé en ce qu'à l'appareil est envoyé un code d'initialisation par l'intermédiaire duquel sont mémorisés, dans la seconde unité de mémoire non volatile de l'appareil, des codes de validation qui permettent d'accéder à certaines fonctions de mesure de la première unité de mémoire non volatile.

19. Procédé selon l'une des revendications 13 à 18, caractérisé en ce qu'à l'appareil est envoyé un code d'initialisation par l'intermédiaire duquel sont mémorisés, dans la seconde unité de mémoire non volatile, des codes de validation qui permettent d'accéder à titre d'essai à des fonctions de mesure sélectionnées de la première unité de mémoire non volatile, chacun des accès d'essai auxdites fonctions de mesure sélectionnées étant compté et, au bout d'un nombre préalablement fixé d'accès d'essai, lesdites fonctions de mesure sélectionnées étant à nouveau verrouillées.
